# EUROPEAN PATENT APPLICATION

(11) **EP 1 743 747 A1**
(43) Date of publication of application: **17.01.2007**
(21) Application number: 05787909.0
(22) Date of filing: 28.09.2005
(51) Int. Cl.: B25J 19/00, H02G 3/22, H02G 11/00, H05K 7/00

(54) **INDUSTRIAL ROBOT**

(30) Priority: 14.04.2005 JP 2005116865
(71) Applicant: MATSUSHITA ELECTRIC INDUSTRIAL CO., LTD., Osaka 571-8501 (JP)
(72) Inventor: IWAI, Seiji Matsushita Electric Ind. Co., Ltd., Chuo-ku, Osaka-shi, Osaka 540-6319 (JP); SUZUKI, Shiaki Matsushita Electric Ind. Co., Ltd., Chuo-ku, Osaka-shi, Osaka 540-6319 (JP); OHARA, Takayasu Matsushita Electric Ind. Co., Ltd., Chuo-ku, Osaka-shi, Osaka 540-6319 (JP)
(74) Representative: Pautex Schneider, Nicole Véronique
(86) International application number: PCT/JP2005/017828
(87) International publication number: WO 2006/112059

(57) **Abstract**

The industrial robot has cables routed, through cable-passing holes (4a, 4b) formed in a side of an arm, between the outside and the inside of the arm. The cables contain mold guide (7) disposed inside cable-passing holes (4a, 4b); cable bundle (6) that passes through the inside of mold guide (7); and filler resin (8) applied to the inside of mold guide (7). The inside of mold guide (7) is filled with filler resin (8), so that cable bundle (6) is held in place.

## Description

### TECHNICAL FIELD

The present invention relates to an industrial robot, particularly, relates to a dust- and water-proof structure of cables disposed at a joint section of an arm.

### BACKGROUND ART

As a prior patent, for example, Japanese Patent Unexamined Publication No. H11-254377 discloses a dust- and water-proof structure of a joint section of a robotic arm. According to the structure, cables are disposed through a through-hole formed in the center of a joint section, and an opening of the arm is closed with a cover or a gasket.

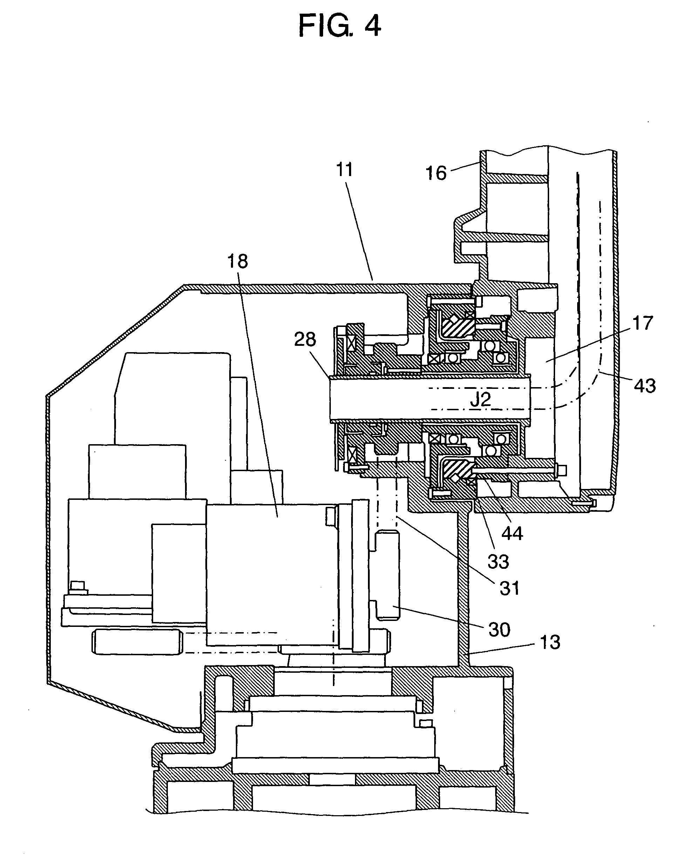

Fig. 4 is a section view illustrating the structure of the robot disclosed in the patent above. In robot 11 of Fig. 4, arm 16 is connected to the upper section of arm 13 through joint J2. Having reducer 17, joint J2 moves arm 16 with the drive of motor 18. Wiring (cables) 43 passes through the interior (through-hole) of hollow shaft 28 of reducer 17. Oil seal 44 is provided to bearing 33 that is disposed on the outermost periphery of reducer 17.

According to the prior art, forming each joint so as to be the same as the structure of joint J2 described above allows robot 11 to have dust- and water-proof joint sections.

In the conventional structure, however, drive motor 18 has to be disposed away from the center of the joint shaft because the through-hole for passing through cables 43 is disposed coaxially with the joint shaft. This positional constraint inevitably increases power transmission components in number, such as pulley 30 and timing belt 31, and bearing parts, resulting in an oversize, overweight joint section with a complicated structure.

When cables 43 cannot pass through the through-hole of reducer 17 due to increase in number of cables, it becomes necessary to employ a large-sized reducer having a larger through-hole, and accordingly, other components including a pulley and a motor have to be larger. This invites increase in size and weight of the joint section. In a robot having such an overweight joint section, the heavy weight acts as a load on the robot, deteriorating movements of the robot.

### SUMMARY OF THE INVENTION

The industrial robot of the present invention contains a cable-passing hole formed in a side of an arm; and cables disposed inside and outside the arm through the hole. The cables further contain a mold guide that is disposed inside the cable-passing hole; a bundle of cables run inside the mold guide; and filler resin that is applied to the inner side of the mold guide. The inner side of the mold guide is filled with the filler resin, by which the cable bundle is fixed.

Applying dust- and water-proof treatments to only an area having the cable-passing hole allows a joint section to not only have a cost-reduced and compact structure, but also to be dust- and water- resistant.

Even when cables or fluid tubes for supplying air and gas are changed in quantity or size according to changes in specifications of, for example, a motor for driving each joint shaft of the robot, a welding feeding device, and various sensors mounted on the robot, the aforementioned structure can cope with the changes easily, with no effect on the power transmission components disposed on a joint shaft.

According to the industrial robot of the present invention, as described above, a dust- and water-proof structure of a joint of the arm can be realized by using a simple structure. Besides, the structure highly adaptable to changes in cables, fluid tubes, or the like, with no need for geometrical changes in power transmission components.

### BRIEF DESCRIPTION OF THE DRAWINGS

Fig. 1 is a perspective view of the industrial robot of an exemplary embodiment of the present invention.
Fig. 2 is a perspective view of the structure of cables employed for the robot shown in Fig. 1.
Fig. 3 is a section view of the cables in the vicinity of a cable-passing hole in the robot of Fig. 1.
Fig. 4 is a section view of a structure of a conventional robot.

### REFERENCE MARKS IN THE DRAWINGS

- 1: first arm
- 2: second arm
- 3: third arm
- 4a, 4b: cable-passing hole
- 5: cable guide tube
- 6: cable bundle
- 7: mold guide
- 8: filler resin
- 9: sealant
- 10: cables

### DETAILED DESCRIPTION OF THE PREFERRED EMBODIMENTS

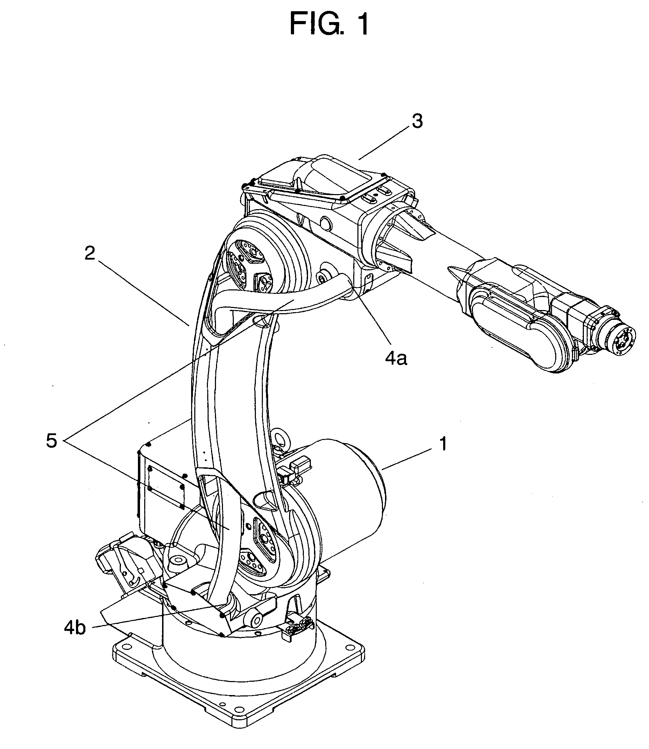

Hereinafter, an exemplary embodiment of the present invention is described with reference to Fig. 1 through Fig. 3. Fig. 1 is a perspective view of a robot of the embodiment of the present invention.

The robot of Fig. 1 has first arm 1, second arm 2, third arm 3, and cable-passing holes 4a, 4b each of which is formed in a side adjacent to an arm joint section. Cable guide tube 5, which is disposed along the side of second arm 2, accommodates cable bundle 6 therein. Cable bundle 6 contains electrical cables and gas tubes that are connected to corresponding devices in the robot through cable-passing holes 4a and 4b. That is, as shown in Fig. 1, cable guide tube 5 is passed through cable-passing holes 4a and 4b and routed from first arm 1 through third arm 3. Cable guide tube 5, which is made of, for example, a metallic spring, protects cable bundle 6.

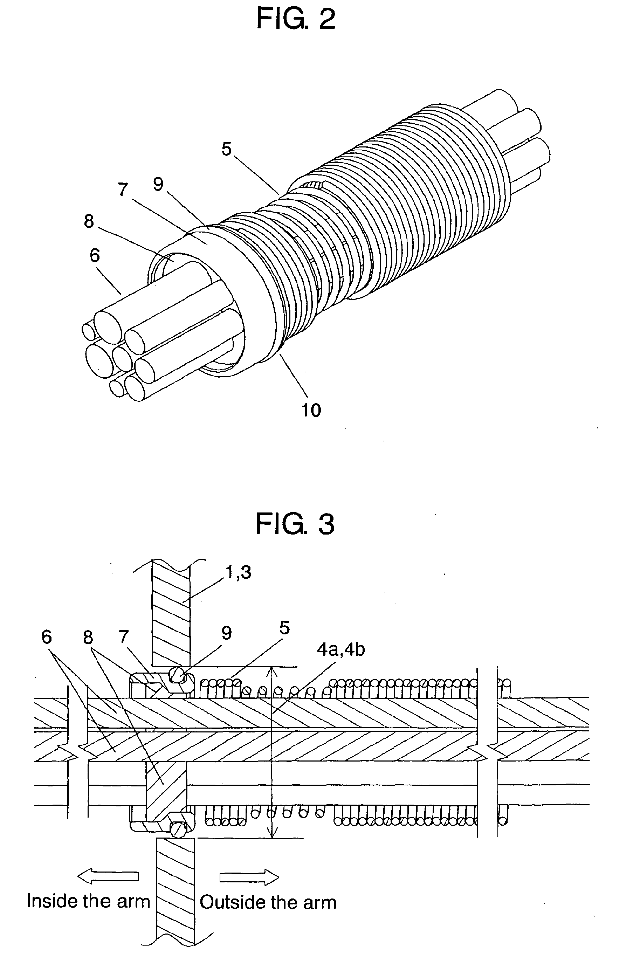

Fig. 2 is a perspective view of the structure of the cables in the robot shown in Fig. 1. Fig. 3 is a section view of the cables in the vicinity of a cable-passing hole.

Cable 10 shown in Fig. 2 contains mold guide 7 located inside cable-passing holes 4a, 4b in Fig. 1; cable bundle 6 of a plurality of filaments that runs inside mold guide 7; and filler resin 8 applied to the inside of mold guide 7. Cable guide tube 5 protects cable bundle 6. Cable guide tube 5 is connected to mold guide 7.

Cable bundle 6 is disposed inside cable guide tube 5 and mold guide 7. Mold guide 7 is, for example, made of resin. The inside of mold guide 7 is filled with filler resin 8 so as to fix cable bundle 6. For example, epoxy resin is employed for filler resin 8.

Mold guide 7 is, as shown in Fig. 3, disposed at each inside of cable-passing holes 4a, 4b. Sealant 9 seals a gap between the outside (the outer perimeter) of mold guide 7 and the inside (the inner perimeter) of cable-passing holes 4a, 4b. As for sealant 9, a solid gasket typified by an O-ring is employed. Instead of an O-ring, oil seal, a V-ring, and liquid surface sealant can be employed.

In the aforementioned structure, a molded section (specifically, filler resin 8 and sealant 9) disposed only at mold guide 7 disposed in cable-passing holes 4a, 4b prevents the entry of dirt and water from the outside to the inside of the arm. That is, the structure above allows the internal cavities of first arm 1 having cable-passing hole 4a and of third arm 3 having cable-passing hole 4b to be dust- and water-resistant.

Suppose that the structure does not contain mold guide 7. With cable bundle 6 alone, since the bundle itself cannot retain a definite shape, dust or water easily enters through the gap between the bundle and cable-passing holes 4a, 4b. However, as described above, the structure of the embodiment contains mold guide 7 with a tube-like shape for accommodating cable bundle 6 therein, and the gap between mold guide 7 and cable bundle 6 is filled with resin, which gives mold guide 7 a definite outer shape. By determining the shape of cable-passing holes 4a, 4b suitable for the shape of mold guide 7, and then disposing the cable bundle so that mold guide 7 is positioned at cable-passing holes 4a, 4b, the dust- and water-proof structure is easily obtained.

Even when cable bundle 6 has changes in numbers or types of the filament, the dust- and water-proof structure obtained by cable-passing holes 4a, 4b and mold guide 7 is insusceptible to the changes, as long as the outer shape of cable bundle 6 is smaller than the inner diameter of mold guide 7. It is therefore no need for changing the size of cable-passing holes 4a, 4b, and also no effect on the power transmission components disposed on a joint shaft.

Further, suppose that cable bundle 6 is too large to be passed through mold guide 7 because of increase in numbers or sizes of the filaments according to changes in specifications for cable bundle 6. Even in such a case, disposing another mold guide suitable for cable bundle 6 and forming cable-passing holes 4a, 4b so as to have a shape suitable for the mold guide can deal with the changes. Unlike in a conventional robot, in this case, too, there is no effect on the power transmission components disposed on a joint shaft. In this way, with the structure of the embodiment, dust- and water-resistance can be easily obtained.

The simple procedures described above-forming mold guide 7 having a fixed inner cavity and outer shape; passing cable bundle 6 through mold guide 7 and fixing the bundle by molding; and applying a sealing process on the outside of mold guide 7-allow the cables, which are routed from the outside to the inside of the robot, to be dust- and water-resistant.

The dust- and water-proof structure of a conventional robot, as described in Background Art, invites a large-sized, heavyweight joint section. In contrast, the structure of the present invention has no worry about the inconveniency, and therefore no ill effect on movement performance of a robot.

Although the embodiment of the present invention employs cable bundle 6 formed of a plurality of filaments, it is not limited thereto. Cable bundle 6 does not necessarily contain a fixed number of filaments: either one or more.

Although the embodiment shows an example where cable-passing holes 4a, 4b are formed into a substantially round-shape, it is not limited thereto. The holes can be formed into a substantially oval-shape, or a similar shape.

### INDUSTRIAL APPLICABILITY

The present invention provides a simply configured dust- and water-proof structure of a robot arm, which is therefore widely applicable to industrial robots.

## Claims

1. An industrial robot comprising:
a cable-passing hole formed in a side of an arm; and
cables routed between an inside and an outside of the arm through the cable-passing hole, the cables further including:
a mold guide disposed in an inside of the cable-passing hole;
a cable bundle passed through an inside of the mold guide; and
filler resin applied to the inside of the mold guide,
wherein, the inside of the mold guide is filled with the filler resin so as to fix the cable bundle.

2. The industrial robot of claim 1 further includes a sealant for sealing a gap between the cable-passing hole and the mold guide.

3. The industrial robot of claim 2, wherein the sealant is a solid gasket.

4. The industrial robot of claim 3, wherein the solid gasket is an O-ring.

5. The industrial robot of claim 1, wherein the cable-passing hole is formed in a vicinity of a joint section of the arm.

6. The industrial robot of claim 1, wherein the filler resin is epoxy resin.

## Amended claims

### Amended claims under Art. 19.1 PCT

**1.** (Amended) An industrial robot comprising:
a cable-passing hole formed in a side of an arm; and
cables routed between an inside and an outside of the arm through the cable-passing hole, the cables further including:
a cylindrical mold guide disposed in an inside of the cable-passing hole;
a cable bundle passed through an inside of the mold guide; and
filler resin applied to the inside of the mold guide,
wherein, the mold guide is disposed, with a length out of an entire length of the cables, on an outer perimeter of the cable bundle, and a region that is inside the mold guide and adjacent to the cable-passing hole is filled with the filler resin applied in a direction substantially orthogonal to a direction in which the cable bundle runs, so that the cable bundle is retained by the resin filler.

**2.** The industrial robot of claim 1 further includes a sealant for sealing a gap between the cable-passing hole and the mold guide.

**3.** The industrial robot of claim 2, wherein the sealant is a solid gasket.

**4.** The industrial robot of claim 3, wherein the solid gasket is an O-ring.

**5.** The industrial robot of claim 1, wherein the cable-passing hole is formed in a vicinity of a joint section of the arm.

**6.** The industrial robot of claim 1, wherein the filler resin is epoxy resin.
